Europäisches Patentamt

European Patent Office

Office européen des brevets

(11) Publication number: **0 207 525**
**B1**

(12) **EUROPEAN PATENT SPECIFICATION**

(45) Date of publication of patent specification: **12.09.90**

(21) Application number: **86109129.6**

(22) Date of filing: **04.07.86**

(51) Int. Cl.⁵: **F 16 D 27/16, B 60 K 25/02,**
**B 60 K 41/22, B 60 K 41/02,**
**B 60 K 41/08**

(54) Inching control arrangement for a vehicle with automatic transmission.

(30) Priority: **05.07.85 JP 148932/85**

(43) Date of publication of application:
**07.01.87 Bulletin 87/02**

(45) Publication of the grant of the patent:
**12.09.90 Bulletin 90/37**

(84) Designated Contracting States:
**DE FR GB**

(56) References cited:
**EP-A-0 059 035**
**GB-A-2 080 910**

(73) Proprietor: **FUJITSU LIMITED**
**1015, Kamikodanaka Nakahara-ku**
**Kawasaki-shi Kanagawa 211 (JP)**
(73) Proprietor: **Kabushiki Kaisha Toyoda Jidoshokki**
**Seisakusho**
**1, Toyoda-cho 2-chome, Kariya-shi**
**Aichi-ken 448 (JP)**

(72) Inventor: **Hata, Seiichi c/o FUJITSU LIMITED**
**Patent Dep.**
**Kosugi Fujitsu Building 1812-10 Shimonumabe**
**Nakahara-ku, Kawasaki-shi Kanagawa 211 (JP)**
Inventor: **Akima, Hideo c/o FUJITSU LIMITED**
**Patent Dep.**
**Kosugi Fujitsu Building 1812-10 Shimonumabe**
**Nakahara-ku, Kawasaki-shi Kanagawa 211 (JP)**
Inventor: **Kitagawa, Kiyoshi c/o FUJITSU**
**LIMITED Patent Dep.**
**Kosugi Fujitsu Building 1812-10 Shimonumabe**
**Nakahara-ku, Kawasaki-shi Kanagawa 211 (JP)**
Inventor: **Hyodo, Masaya c/o K. K. TOYODA**
**JIDOSHOKKI**
**SEISAKUSHO 1 Toyoda-cho, 2-chome**
**Kariya-shi Aichi, 448 (JP)**
Inventor: **Niinomi, Koji c/o K. K. TOYODA**
**JIDOSHOKKI**
**SEISAKUSHO 1 Toyoda-cho, 2-chome**
**Kariya-shi Aichi, 448 (JP)**

Courier Press, Leamington Spa, England.

**EP 0 207 525 B1**

(74) Representative: **Sunderland, James Harry et al HASELTINE LAKE & CO Hazlitt House 28 Southampton Buildings Chancery Lane London WC2A 1AT (GB)**

## Description

The present invention relates to an inching control arrangement for a vehicle with automatic transmission.

For instance, a fork lift is a vehicle specially designed for cargo handling. This vehicle is naturally capable of controlled forward and backward motion, as in the case of an ordinary vehicle, but also affords controlled lifting of the fork for cargo handling. Power for the hydraulic source for moving the vehicle and for lifting the fork is provided in common by a motor for driving the fork lift. When a driver steps on (depresses) the accelerator in order to increase speed of lifting of the fork, the speed of travel of the vehicle also increases. Inching operation is necessary in order that the fork might be lifted while the vehicle is stationary or moving at very low speed.

At present, for a fork lift, such inching operation is effected by the operator stepping on (depressing) the clutch pedal of the fork lift. For example, when the clutch is set to a perfect (DISENGAGED) OFF state, by the operator sufficiently stepping on (depressing) the clutch pedal, the vehicle itself does not move even when the operator steps on (depresses) the accelerator pedal and the fork alone can be lifted up at a high speed. Further it is also possible for the vehicle to be allowed to move gradually by setting the clutch to a half-clutch condition, by reducing the degree of stepping on (the degree of depression of) the clutch pedal. Such inching operation requires considerable skill of the operator and it is expected that the transmitting operation of the vehicle is carried out automatically.

An automatic transmission having a mechanical clutch and gears just like those of an ordinary manual transmission has been proposed for an ordinary passenger car. No clutch pedal is provided for this automatic transmission and a gear change is carried out by an actuator, controlled by a signal sent from a control unit, in place of a gear change lever.

Such an automatic transmission using a dry-type single plate clutch and gear transmission is convenient for a passenger car. With such a transmission a driver is required only to operate the accelerator pedal, the clutch pedal and gear change lever being absent (a lever for selecting the running mode is provided) but, naturally, inching control is not provided.

EP-A-0 059 035 discloses a vehicle electronic control system for a friction clutch, which system takes clutch wear into account. A signal representative of clutch position is modified by a signal derived from a clutch wear compensator.

GB-A-2 080 910 discloses a friction clutch with automatic operation. The clutch may be operated on a basis which takes clutch wear into account.

According to the present invention, there is provided inching control apparatus for a vehicle having an engine providing power for moving the vehicle and also for other operations effected by the vehicle, for instance cargo handling operations, and having automatic transmission comprising a gear-type transmission, a mechanical clutch, actuator means for operating the gear-type transmission and the clutch and a controller for controlling the actuator, the apparatus including

an inching control member, displaceable by an operator of the vehicle, serving for separating drive for moving the vehicle and drive for the said other operations,

characterised by

means operable to detect the degree of displacement of the inching control member by the vehicle operator, and operable to control the degree of engagement of the clutch in accordance with the detected degree of displacement,

means operable to detect actual clutch position when the clutch is set in a half-clutch condition, and

means operable to correct the movement of the clutch, in dependence upon the detected actual clutch position, in response of displacement of the inching control member, so that the relationship between inching control member displacements and clutch engagement conditions is substantially maintained regardless of wear of the clutch.

Apparatus embodying the present invention allows inching control of a vehicle with automatic transmission and comprises a control unit which controls a clutch in accordance with the degree of depression of (an amount of stepping on) an inching pedal, which defines a target value, and mechanical clutch position, which provides a feed-back quantity, there being provided a table which outputs a corrected clutch position, in relation to which the half clutch position is considered as a constant clutch position, the corrected clutch position being obtained by making access to said table in dependence upon detected clutch position, and control being carried out so that the corrected clutch position matches the degree of depression of the inching pedal.

The present invention relates primarily to vehicles for industrial use, such as a fork lift, provided with automatic transmission (using a mechanical clutch) but which can also accomplish inching operation.

Particularly the invention relates to such vehicles, e.g. a fork lift, in which one power source (the motor or engine) not only drives (moves) the vehicle but supplies power also for another purpose, e.g. for operating the lift of a fork lift.

As explained below, in such vehicles, clutch wear can represent a serious problem, particularly in relation to inching operations. An embodiment of the present invention can provide for mitigation of this problem.

In an embodiment of this invention, it is provided that an inching pedal can always be operated in the same sense (always presents the same "feel" for an operator) by automatically compensating for clutch wear.

Reference is made, by way of example, to the accompanying drawings, in which:

Figs. 1A and 1B are graphs for assistance in explaining operation of an embodiment of the present invention;

Figs. 2A and 2B schematically illustrate operations relating to an embodiment of the present invention, and are in the form of flow charts;

Fig. 3 is a graph for assistance in explaining an example of a method of detecting a half-clutch position;

Fig. 4 is a schematic diagram indicating the structure of a vehicle with automatic transmission; and Figs. 5(a) and 5(b) are graphs schematically illustrating effects of clutch wear on the relationship between clutch position and inching pedal position.

A fork lift with automatic transmission having a mechanical clutch as mentioned above, is provided in accordance with an embodiment of the present invention with an inching pedal for inching control.

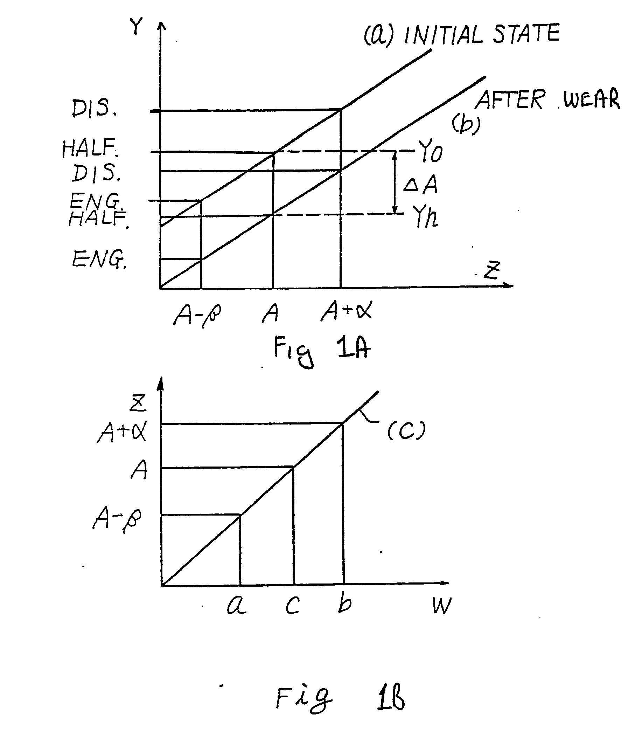

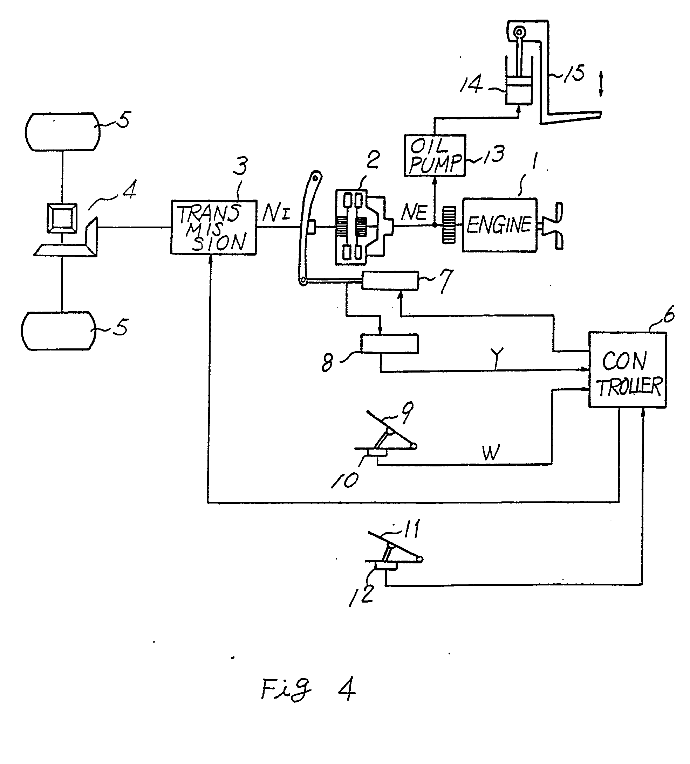

Fig. 4 schematically indicates, in outline, construction of a fork lift vehicle of this type. In Fig. 4, 1 is an engine; 2 a mechanical clutch; 3 an automatic transmission; 4 differential gearing; 5 wheels; 6 a control unit (such as a microcomputer control unit, etc.) which controls clutch 2 and automatic transmission 3, etc.; 7 a clutch drive actuator; 8 a clutch stroke (position) detection sensor utilizing a potentiometer; 9 an inching pedal; 10 a sensor which detects a degree of stepping on (degree of depression of) the inching pedal; 11 an accelerator pedal; 12 a sensor which detects a degree of stepping on (degree of depression of) the accelerator pedal; 13 a hydraulic pump; 14 a hydraulic cylinder; and 15 a cargo handling fork.

The automatic transmission 3 combines gears as in an ordinary manual transmission. A change of gear ratio is carried out by means of an actuator controlled by a signal sent from the control unit 6, instead of by a manually operated gear change lever.

When the fork lift starts to move, operations of clutch 2 to attain OFF (DISENGAGED), half-clutch and ON (ENGAGED) conditions are necessary, but such clutch operations are carried out by means of the actuator through the control unit 6. Therefore, like an automatic transmission vehicle utilizing a torque converter, the automatic transmission vehicle utilizing clutch and gear transmission as shown in Fig. 4 does not require a manually operable clutch pedal for vehicle movement. A pedal (inching pedal), which has a function similar to that of a clutch pedal, is provided in order to afford inching control.

The inching pedal 9 is not mechanically coupled with the clutch 2. Control of the clutch is effected via a servo control system. Namely, the amount W of stepping on (depression of) the inching pedal 9 is detected by sensor 8 and fed back to control unit 6. Roughly speaking, the control unit drives the actuator 7 until the actual clutch position Y reaches a point corresponding to the amount W of stepping on (depression of) the inching pedal (target clutch position).

In an ordinary passenger car with automatic transmission, using a dry-type single plate clutch and gear transmission as mentioned above, a control circuit, mainly consisting of a microcomputer, senses amount of stepping on (degree of depression of) the accelerator pedal, running speed (e.g. road speed), rate of revolution of the engine, gear position and clutch position, etc. Moreover, when the microcomputer judges, on the basis of such data, that the driver intends to accelerate, it opens the throttle and automatically shifts gear upwards when the rate of revolution of the engine reaches a specified value. For the upwards gearshift, the clutch is first set to OFF (DISENGAGED), the gear is shifted to the next higher gear through neutral, and the clutch is again smoothly brought into engagement. On the other hand, when the control unit judges that the driver intends to decelerate, the gear is shifted down.

Although details of actual construction are different, the transmission of the forklift as shown in Fig. 4 is similar in principle. The significant difference is that a high-power hydraulic pump for lifting up the fork is also driven by the engine output. In a case in which a hydraulic pump is used for an actuator in the automatic transmission of a passenger car, the hydraulic pump must of course be driven, but a large pump output is not required, and problems do not arise.

Since the clutch 2 is of mechanical type, the clutch will be subject to wear as it ages, with consequent changes to coupling conditions (changes in relationship between clutch position and pedal position).

The half-clutch condition is used much more extensively in a fork lift than it is in an ordinary vehicle because a fork lift is used for frequent stop, start and inching operations, repeated over a short period of time.

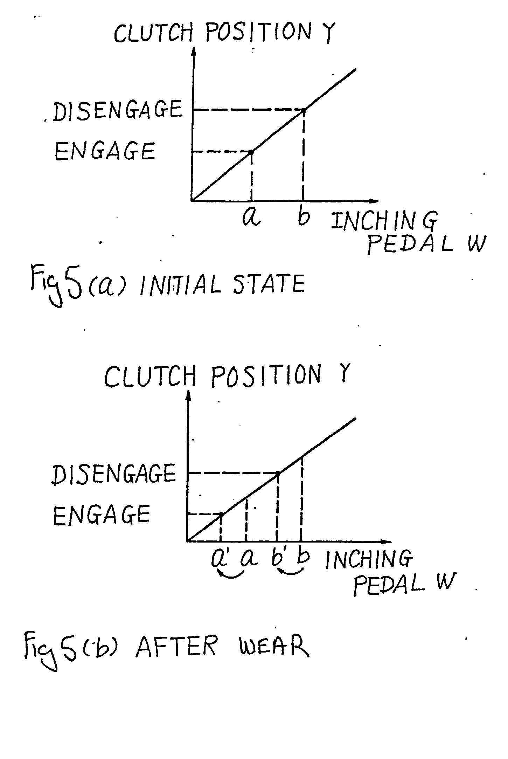

For example, in an initial state (with an unworn clutch) the relationship between the degree of depression of the inching pedal (the amount to which the operator steps on the inching pedal) and clutch position may be as shown in Fig. 5(a). In Fig. 5(a) an amount a of depression of the inching pedal corresponds to a clutch ON (ENGAGE) condition while an amount b of pedal depression corresponds to a clutch OFF (DISENGAGE) condition.

After a while, however, with wear of the clutch, the relationship may alter as indicated in Fig. 5(b). Namely, an amount a' of depression of the inching pedal then corresponds to a clutch ON (ENGAGE) condition, while an amount b' corresponds to a clutch OFF (DISENGAGE) condition. Moreover an amount a of inching pedal depression now corresponds to a half-clutch condition.

Although it depends upon the operating conditions of a fork lift, such a change in relationship between pedal depression and clutch position may sometimes be large due to extreme wearing of the clutch. Moreover, in some cases clutch wear may be so great that the clutch plate must be replaced every day.

Without compensat. ·n as explained below, in such circumstances la·.je variations occur in the sense of operation of the inching pedal (in the "feel" of the pedal for the operator), and occur quickly, and thereby it is no longer possible for the operator to smoothly and delicately operate the fork lift. Particularly, a problem arises in ensuring safe operations, because the sense of operation (the "feel") changes greatly before and after the clutch plate is exchanged.

Amount of wear of a clutch can be seized (detected) as displacement of half-clutch position. Further, by effecting control such that the amount of stepping on the inching pedal (degree of depression of the inching pedal) does not directly correspond to (directly determine) clutch position but such that control involves an indirect correspondence, with an actually detected half clutch position corresponding to a constant reference corrected clutch position, the same amount of coupling (degree of engagement) of the clutch can always be realized for the same amount of stepping on the inching pedal (the same extent of depression of the inching pedal) and effects of wear of the clutch can be absorbed.

That is, control is effected so that the same amount of depression of the inching pedal always brings about the half-clutch condition (regardless of clutch wear) by modifying the control relationship between amount of depression of the inching pedal and actually determined clutch position. In effect, amount of inching pedal depression is referred to corrected clutch positions (unaffected by wear) and then the control system refers corrected clutch positions to actual clutch positions in accordance with a relationship which depends upon clutch wear.

Figs. 1A and 1B are graphs of a schematic nature for assistance in explaining an embodiment of the present invention. In Fig. 1A, lines (a) and (b) respectively show the relationships between actual clutch position Y and corrected clutch position Z, with reference (constant value) to the half clutch position, in an initial state (no clutch wear) and after the clutch has been subjected to wear. In Fig. 1B, line (c) shows the relationship between corrected clutch position Z, with reference to the half-clutch position, and amount W of stepping on (degree of depression of) the inching pedal.

As indicated by lines (a) and (b) the relationship between clutch position Y detected by a sensor 8 as shown in Fig. 4 and clutch ON-OFF condition corresponding thereto changes as between an initial state of the clutch and a subsequent state in which the clutch is worn.

Initially, the clutch becomes OFF (DISENGAGED) after it is operated sufficiently by the actuator 7, but when the clutch has worn, it becomes OFF (DISENGAGED)- starts to disengage - even with a small amount of operation. Therefore, an arrangement in which clutch position Y is simply indicated or determined directly by the amount of stepping on (degree of depression of) the inching pedal suffers effects of clutch wear and thereby an operator's ability to sense half-clutch position may be degraded as the clutch wears.

It will be seen, however, from Fig. 1A, that the relationship between corrected clutch position and actual clutch ON-OFF condition is the same whether or not the clutch is worn. This is provided by changing the relationship between actual clutch position Y and corrected clutch position Z.

Briefly, as between lines (a) and (b), in this example (see below), a correction factor of $\triangle A$ is introduced into the relationship, so that for both lines the relationship between corrected clutch position Z and clutch ON-OFF condition is maintained.

The correction factor is determined by detecting (changes in) actual clutch position corresponding to half-clutch condition.

The half-clutch condition is detected by a suitable method (see below) and is taken to correspond to a half-clutch position A, in terms of the corrected clutch position Z, and (in relation to half-clutch position A) values $+\alpha$, $-\beta$ are considered as providing clutch OFF and clutch ON positions, in terms of corrected clutch position Z. If the clutch OFF position $(A+\alpha)$ and clutch ON position $(A-\beta)$ respectively correspond to degrees of depression of the inching pedal b and a $(A+\alpha$ provided at b and therefore clutch operated as OFF; $A-\beta$ provided at a and therefore clutch operated as ON), when the amount of stepping on (depression of) the inching pedal is c, the half-clutch condition A is obtained, and the half-clutch condition can always be realized with the same amount of stepping on the inching pedal (with the same extent of depression of the inching pedal) — regardless of clutch wear.

Actual half-clutch position can be detected by reading an output of a clutch position sensor 8 as provided in Fig. 4 when a particular clutch condition exists. The particular half-clutch condition can be defined, for example, as a condition in which if the vehicle starts to move from a stopped condition, the clutch position is changed to ON from OFF and a difference between a number of rotations (rate of rotation) of a drive shaft on the engine side and a number of rotations (rate of rotation) of a drive shaft on the wheel side reaches a specified value under conditions that the amount of depression of the accelerator pedal is within a specified range and the brake is released.

Since a fork lift is often called upon to execute repeated start and stop operations, measurement of a half-clutch position (under the particular condition) can be effected frequently.

Limitation, or definition, of measuring conditions is necessary to provide more accurate measurement, and it is recommended that in cases in which defined measuring conditions cannot easily be attained (e.g. in the course of normal operations) a switch be provided for designating a measuring mode in which the control unit (6) outputs (establishes) the predetermined conditions and measurement of half-clutch position is carried out under those conditions.

For example, it is desirable that clutch position is read when the throttle is opened to a predetermined degree, the gear is in neutral, the clutch is set from OFF to ON at a predetermined speed, a difference between the numbers (rates) of rotations of drive shafts on the side of the engine and on the side of wheels (on opposite sides of the clutch) reaches a predetermined value.

Values $\alpha$ and $\beta$ may be fixed or may be variable in accordance with the clutch position as coefficients for clutch position Y in the half-clutch condition. In this example, $\alpha$ and $\beta$ are fixed.

Values specifying the relationship between actual clutch position Y and corrected clutch position Z are stored as a table in ROM (read-only-memory) and corrected clutch position Z is obtained as a feedback amount for the clutch servo system by accessing the table in accordance with the clutch position Y (sensed by the sensor 8). In principle, several such tables as mentioned above are prepared, each specifying such a relationship appropriate for a different value of half-clutch position Y actually measured (appropriate for different amounts of clutch wear). An appropriate table is selected for use in accordance with the measured value.

In fact, when the values $\alpha$ and $\beta$ are fixed, it is necessary merely to move the whole contents of a table in parallel (in accordance with $\triangle A$) to take wear into account. Therefore, it is sufficient to prepare only one table and to provide for the addition of a constant value, which changes in accordance with wear of the clutch, to a corrected clutch position Z' as taken from the table. For example, if difference between a current actually measured value and an initial value of half-clutch position is $\triangle A$, a corrected clutch position can be obtained (for any clutch position) by adding $\triangle A$ to a value read from the table.

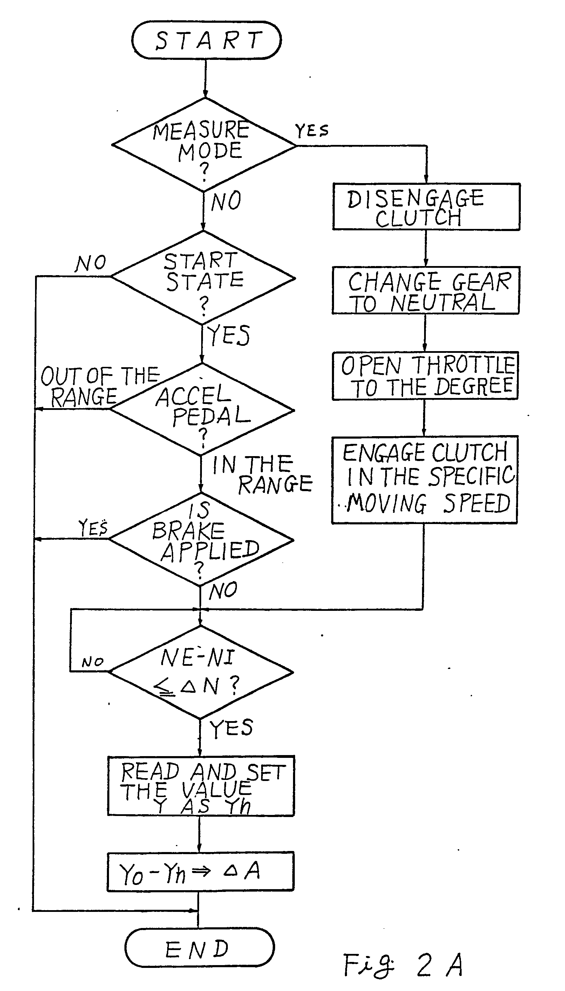

Fig. 2A schematically illustrates, in the form of a flow chart, half-clutch position measuring processes relating to an embodiment of the present invention.

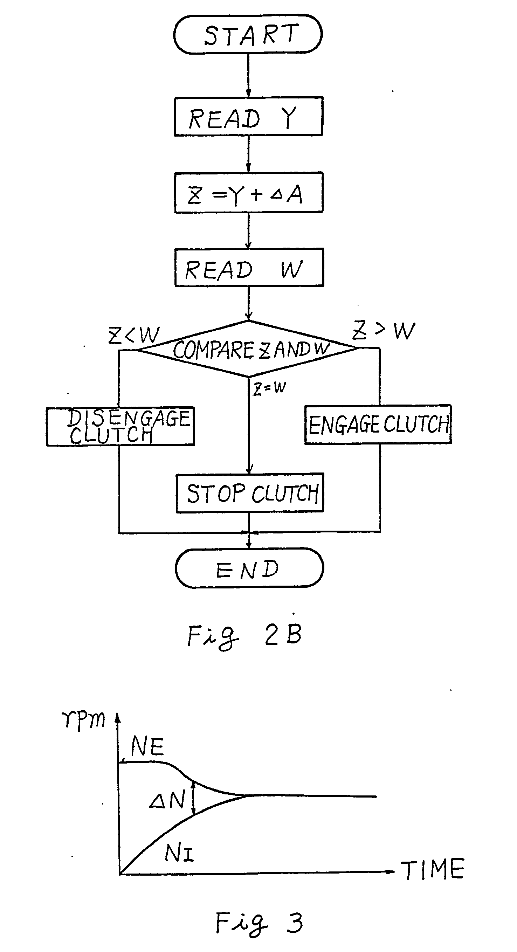

First, it is determined whether or not a measuring mode is designated. If the measuring mode is not designated, it is determined whether or not a starting condition exists. If the vehicle is in a start mode, it is determined whether or not the amount of stepping (extent of depression of) the accelerator pedal is within a specified range. If the accelerator pedal is within the specified range, it is determined whether or not the brake is reset (not applied). When the brake is reset (not applied), operations remain as is until a difference between a number of rotations (rate of revolution) $N_E$ of the engine side of the clutch and a number of rotations (rate of revolution) $N_1$ of the transmission side $N_T$ of the clutch reaches the predetermined value or less $\triangle N$ (see Fig. 3). When $N_E - N_1 \leqq \triangle N$, the clutch position Y is read (sensor 8) and set as Yh. Here, difference $\triangle A$ between the

initial value $Y_0$ of half-clutch position and Yh is obtained. This value $\triangle A$ corresponds to wear of the clutch.

When the measurement mode is designated, the clutch is first turned OFF, gear is neutralized, the throttle is closed to a specified angle (degree) and the clutch is moved in the ON direction at a specified speed. Operations after $N_E - N_1 \leqq \triangle N$ are the same as those explained above. In other cases, this routine immediately terminates. This routine is started at regular intervals (several milliseconds to several hundreds of millisecond).

Fig. 2B schematically illustrates, in the form of a flow chart, inching control in relation to an embodiment of the present invention. Clutch position Y is first read and corrected clutch position $Z = Y + \triangle A$ obtained. An amount of stepping on (extent of depression of) the inching pedal is read and compared with Z. When Z = W, the clutch is not moved and this routine terminates. If Z > W, the clutch is moved in an ON (ENGAGEMENT) direction. If Z < W, the clutch is moved in an OFF (DISENGAGEMENT) direction. This processing routine is also started at regular intervals. The clutch may be moved a fixed distance in respect of processing in this processing routine, or may be moved continuously until a next instruction is issued.

Instead of converting clutch position Y, detected by the sensor 8 as described above, to corrected clutch position Z by making reference to a table provided in relation to the control unit 6, and then controlling the actuator 7 so that it achieves a state appropriate to the amount W of depression of the inching pedal, it is possible, in an embodiment of the present invention, to convert the amount W of depression of the inching pedal to a corrected clutch position Z (using a table provided in advance in the control unit 6) and to control the actuator so that the corrected clutch position Z becomes equal to the clutch position Y detected by the sensor.

As explained above, an embodiment of the present invention detects actual half-clutch point and corrects the clutch position as a feedback amount and therefore provides an advantage that the inching can be controlled by always operating the inching pedal in the same feeling.

An embodiment of the present invention relates to a vehicle such as a fork lift in which a hydraulic pump for driving the fork is driven by the engine which provides power for running or moving the fork lift, and in which inching control is provided even though automatic transmission is employed for running of the vehicle. Inching control means control of the clutch for separating the vehicle running (moving) system and cargo handling (the fork) system. This control is effected by an operator through an inching pedal. In a fork lift, the clutch plate suffers a remarkable amount of wear and therefore the relationship between amount of stepping on (extent of depression of) the inching pedal and the degree of engagement of the clutch changes abruptly. An embodiment of the present invention involves a technique for adequately measuring clutch position for resulting in the actual half-clutch condition and to compensate for control of the clutch with a view to maintaining unchanged the relationship between extent of depression of the inching pedal and the degree of engagement of the clutch.

An embodiment of the present invention provides an inching control system for a vehicle with an automatic transmission consisting of dry type single plate clutch, gear type transmission, actuator which drives them and a controller which controls said actuator and provided with an object to be driven by an engine for drive the vehicle to run and an inching pedal which separates the drive for causing a vehicle to run and the drive for objects to be driven, comprising:

a means for detecting amount of stepping on the inching pedal and controlling amount of engagement of clutch by operating the clutch in accordance with said amount of stepping on the inching pedal,

a means for actually measuring clutch position where the clutch is set in the half-clutch condition, and a means for correcting amount of operation of

clutch based on said actually measured clutch position so that relation between the amount of stepping on the inching pedal and engagement of clutch becomes always constant.

## Claims

1. Inching control apparatus for a vehicle having an engine (1) providing power for moving the vehicle and also for other operations effected by the vehicle, for instance cargo handling operations, and having automatic transmission (3) comprising a gear-type transmission, a mechanical clutch (2), actuator means (7) for operating the gear-type transmission and the clutch and a controller (6) for controlling the actuator (7), the apparatus including

an inching control member (9), displaceable by an operator of the vehicle, serving for separating drive for moving the vehicle and drive for the said other operations,

characterised by

means (10, 6, 7) operable to detect the degree of displacement of the inching control member (9) by the vehicle operator, and operable to control the degree of engagement of the clutch (2) in accordance with the detected degree of displacement,

means (8) operable to detect actual clutch position when the clutch is set in a half-clutch condition, and

means (6) operable to correct the movement of the clutch (2), in dependence upon the detected actual clutch position, in response of displacement of the inching control member (9), so that the relationship between inching control member (9) displacements and clutch (2) engagement conditions is substantially maintained regardless of wear of the clutch (2).

2. Apparatus as claimed in claim 1, wherein the inching control member is an inching pedal (9).

3. Apparatus as claimed in claim 1 or 2, the vehicle being a fork lift.

4. Apparatus as claimed in claim 3, wherein the engine (1) provides power for moving the fork lift and for operating the fork (15).

## Patentansprüche

1. Steuervorrichtung zum millimeterweisen Bewegen eines Fahrzeugs mit einem Motor (1), der Energie zur Bewegung des Fahrzeugs und auch für andere Operationen liefert, die von dem Fahrzeug bewirkt werden, z.B. für Lastenhantierungsoperationen, und mit einem automatischen Getriebe (3), welches ein Zahnradgetriebe, eine mechanische Kupplung (2). eine Betätigungseinrichtung (7) zum Betreiben des Zahnradgetriebes und der Kupplung und einen Controller (6) zum Steuern des Betätigers umfaßt, welche Vorrichtung enthält:

ein Steuerglied (9) zum millimeterweisen Bewegen, welches von der Bedienerperson des Fahrzeugs versetzbar ist und zum Trennen des Antriebs zur Bewegung des Fahrzeugs und des Antriebs für die genannten anderen Operationen dient,

gekennzeichnet durch

eine Einrichtung (10, 6, 7), die betreibbar ist, um den Grad der Versetzung des Steuerglieds (9) zum millimeterweisen Bewegen durch die Bedienungsperson zu detektieren, und betreibbar ist, um den Grad des Eingriffs der Kupplung (2) in Übereinstimmung mit dem detektierten Grad der Versetzung zu steuern,

Einrichtungen (8), die betreibbar sind, um die tatsächliche Kupplungsposition zu detektieren, wenn die Kupplung in einen Halb-Kupplungs-Zustand gesetzt ist, und

Einrichtungen (6), die betreibbar sind, um die Bewegung der Kupplung (2) in Abhängigkeit von der detektierten tatsächlichen Kupplungsposition zu steuern, ansprechend auf die Versetzung des Steuerglieds (9) zum millimeterweisen Bewegen, so daß das Verhältnis zwischen den Versetzungen des Steuerglieds (9) zum millimeterweisen Bewegen und den Kupplungseingriffzuständen im wesentlichen aufrechterhalten wird, unabhängig von der Abnutzung der Kupplung (2).

2. Vorrichtung nach Anspruch 1, bei der das Steuerglied zum millimeterweisen Bewegen ein Pedal zum millimeterweisen Bewegen (9) ist.

3. Vorrichtung nach Anspruch 1 oder 2, bei der das Fahrzeug ein Gabelstapler ist.

4. Vorrichtung nach Anspruch 3, bei der der Motor (1) Energie zur Bewegung des Gabelstaplers und zum Betrieb der Gabel (15) liefert.

## Revendications

1. Appareil de commande de déplacement progressif lent, destiné à un véhicule ayant un moteur (1) qui fournit de l'énergie destinée au déplacement du véhicule et aussi à d'autres opérations exécutées par le véhicule, par exemple des opérations de manutention de fret, et comportant une transmission automatique (3) comprenant une transmission mécanique, un embrayage mécanique (2), un dispositif de manoeuvre (7) destiné à commander la transmission et l'embrayage, et un organe (6) de commande de l'organe de manoeuvre (7), l'appareil comprenant

un organe (9) de commande de déplacement progressif lent, destiné à être déplacé par un opérateur du véhicule et destiné à séparer l'entraînement utilisé pour le déplacement du véhicule de l'entraînement utilisé pour les autres opérations,

caractérisé par:

un dispositif (10, 6, 7) destiné à détecter le degré de déplacement de l'organe (9) de commande de déplacement progressif lent par l'opérateur du véhicule, et destiné à régler le degré d'embrayage de l'embrayage (2) en fonction du degré détecté de déplacement,

un dispositif (8) destiné à détecter la position réelle de l'embrayage lorsque l'embrayage est mis à l'état demi-embrayé, et

un dispositif (6) destiné à corriger le mouvement de l'embrayage (2) en fonction de la position réelle détectée de l'embrayage, à la suite du déplacement de l'organe (9) de commande de déplacement progressif lent, afin que la relation entre les déplacements de l'organe (9) de commande de déplacement progressif lent et les conditions d'embrayage de l'embrayage (2) soit pratiquement conservée indépendamment de l'usure de l'embrayage (2).

2. Appareil selon la revendication 1, dans lequel l'organe de commande de déplacement progressif lent est une pédale (9) de déplacement progressif lent.

3. Appareil selon la revendication 1 ou 2, le véhicule étant un chariot élévateur à fourche.

4. Appareil selon la revendication 3, dans lequel le moteur (1) fournit de l'énergie destinée à déplacer le chariot élévateur et à manoeuvrer la fourche (15).

Fig 1A

Fig 1B

START

MEASURE MODE ? — YES

NO

DISENGAGE CLUTCH

CHANGE GEAR TO NEUTRAL

OPEN THROTTLE TO THE DEGREE

ENGAGE CLUTCH IN THE SPECIFIC MOVING SPEED

START STATE ? — NO

YES

ACCEL PEDAL ? — OUT OF THE RANGE

IN THE RANGE

IS BRAKE APPLIED ? — YES

NO

$NE - NI \leq \triangle N$ ? — NO

YES

READ AND SET THE VALUE Y AS Yh

$Yo - Yh \Rightarrow \triangle A$

END

Fig 2 A

Fig 2B

Fig 3

Fig 4

CLUTCH POSITION Y

DISENGAGE

ENGAGE

a    b    INCHING PEDAL W

Fig 5 (a) INITIAL STATE

CLUTCH POSITION Y

DISENGAGE

ENGAGE

a'  a   b'  b   INCHING PEDAL W

Fig 5 (b) AFTER WEAR